# EUROPEAN PATENT APPLICATION

(11) **EP 4 383 362 A1**
(43) Date of publication of application: **12.06.2024**
(21) Application number: 22852731.3
(22) Date of filing: 28.06.2022
(51) Int. Cl.: H01M 4/13, H01M 4/62, H01M 10/052, H01M 10/0562, H01M 10/44

(54) **CATHODE MATERIAL, BATTERY USING SAID CATHODE MATERIAL, AND METHOD FOR CHARGING BATTERY**

(30) Priority: 06.08.2021 JP 2021130373
(71) Applicant: Panasonic Intellectual Property Management Co., Ltd., Kadoma-shi, Osaka 571-0057 (JP)
(72) Inventor: SAKAIDA, Masashi, Kadoma-shi, Osaka 571-0057 (JP)
(74) Representative: Grünecker Patent- und Rechtsanwälte PartG mbB
(86) International application number: PCT/JP2022/025777
(87) International publication number: WO 2023/013305

(57) **Abstract**

A positive electrode material 1000 of the present disclosure comprises a positive electrode active material 204 and a halide solid electrolyte 100. The halide solid electrolyte 100 comprises F. The positive electrode active material 204 is capable of occluding and releasing lithium ions at greater than 4.3 V versus lithium. A battery of the present disclosure comprises a positive electrode, a negative electrode, and an electrolyte layer disposed between the positive electrode and the negative electrode. The positive electrode comprises the positive electrode material of the present disclosure.

## Description

### Technical Field

The present disclosure relates to a positive electrode material, a battery using the same, and a method for charging a battery.

### Background Art

Patent Literature 1 discloses an all-solid-state battery that uses a halide solid electrolyte.

Patent Literature 2 discloses an all-solid-state battery that uses a sulfide solid electrolyte.

### Citation List

### Non Patent Literature

PTL 1: International Publication No. 2018/025582
PTL 2: International Publication No. 2018/168505

### Summary of Invention

### Technical Problem

An object of the present disclosure is to provide a positive electrode material suitable for use over a high operating potential range.

### Solution to Problem

A positive electrode material of the present disclosure comprises a positive electrode active material and a halide solid electrolyte. The halide solid electrolyte comprises F. The positive electrode active material is capable of occluding and releasing lithium ions at greater than 4.3 V versus lithium.

### Advantageous Effects of Invention

The present disclosure provides a positive electrode material suitable for use over a high operating potential range.

### Brief Description of Drawings

[Fig. 1] Fig. 1 is a cross-sectional view of a positive electrode material 1000, according to a first embodiment.
[Fig. 2] Fig. 2 is a cross-sectional view of a battery 1100, according to a first embodiment.
[Fig. 3] Fig. 3 is a graph showing an initial charge-discharge characteristic of batteries of Examples 1 and 2 and Comparative Examples 1 and 2.

### Description of Embodiments

Embodiments of the present disclosure will be described below with reference to the drawings.

### (First Embodiment)

According to a first embodiment, a positive electrode material comprises a positive electrode active material and a halide solid electrolyte. The halide solid electrolyte comprises F. The positive electrode active material is capable of occluding and releasing lithium ions at greater than 4.3 V versus lithium.

With this configuration, the positive electrode material provided is suitable for use over a high operating potential range.

One way to increase an energy density of batteries is to raise an operating potential range of a positive electrode. This means operating a battery at a potential higher than 4.3 V vs. Li/Li⁺, which is a potential currently used for batteries having a high energy density.

Patent Literature 1 discloses a halide solid electrolyte. Unfortunately, halide solid electrolytes containing Cl, Br, or I as the halogen element undergo oxidative decomposition when the potential is higher than 4.3 V vs. Li/Li⁺. As a result, charge-discharge characteristics of a battery are degraded.

Patent Literature 2 discloses a sulfide solid electrolyte. Sulfide solid electrolytes have low oxidation resistance, and, therefore, if a positive electrode is operated at a potential higher than 4.3 V vs. Li/Li⁺, good charge-discharge characteristics cannot be obtained.

The halide solid electrolyte included in the positive electrode material of the first embodiment contains F and, therefore, can have high oxidation resistance. This is because F has a high redox potential. Accordingly, using the positive electrode material of the first embodiment enables realization of a battery that exhibits excellent charge-discharge efficiency even if the battery is operated at a high potential of greater than 4.3 V vs. Li/Li⁺. The upper limit of the operating potential range of the battery is not particularly limited and is, for example, less than or equal to 6.0 V vs. Li/Li⁺.

As described, the positive electrode material of the first embodiment is suitable for use over a high operating potential range and, thus, can raise the operating potential range of a positive electrode. Accordingly, the positive electrode material of the first embodiment can increase the energy density of a battery.

The halide solid electrolyte may contain one or more other anions, in addition to the anion of F, so that ionic conductivity of the positive electrode material can be increased. Examples of the anions include those of Cl, Br, I, O, S, and Se.

A ratio of an amount of substance of the F to a sum of amounts of substance of the anions that form the halide solid electrolyte may be greater than or equal to 0.50 and less than or equal to 1.0 so that the oxidation resistance of the positive electrode material can be increased.

The halide solid electrolyte may comprise Li, F, and at least one selected from the group consisting of Ti, Zr, and Al so that the ionic conductivity of the positive electrode material can be increased.

The halide solid electrolyte may consist essentially of Li, M, Al, and F. M is at least one selected from the group consisting of Ti and Zr. "The halide solid electrolyte consists essentially of Li, M, Al, and F" means that a ratio of a sum of the amounts of substance (i.e., a molar fraction) of Li, M, Al, and F to a sum of the amounts of substance of all the elements that form the halide solid electrolyte is greater than or equal to 90%. For example, the ratio (i.e., the molar fraction) may be greater than or equal to 95%. The halide solid electrolyte may consist only of Li, M, Al, and F.

The halide solid electrolyte may contain one or more incidentally included elements. Examples of the elements include hydrogen, oxygen, and nitrogen. These elements may be present in raw material powders of the solid electrolyte material or in an atmosphere in which the solid electrolyte material is produced or stored.

The halide solid electrolyte may be represented by Formula 1, shown below.

Li_{6-(4-x)b}(M₁₋ₓAlₓ)_{b}F₆ (1)

M is at least one selected from the group consisting of Ti and Zr. In Formula 1, 0 < x < 1 and 0 < b ≤ 1.5 are satisfied. Halide solid electrolytes represented by Formula 1 have high ionic conductivity.

In Formula 1, 0.01 ≤ x ≤ 0.99 may be satisfied, 0.2 ≤ x ≤ 0.95 may be satisfied, 0.6 ≤ x ≤ 0.9 may be satisfied, 0.65 ≤ x ≤ 0.85, or 0.7 ≤ x ≤ 0.8 may be satisfied, so that the ionic conductivity of the halide solid electrolyte can be increased.

In Formula 1, the upper limit and the lower limit of the range of x may be defined by any combination of values selected from 0.01, 0.2, 0.4, 0.5, 0.5, 0.7, 0.8, 0.95, and 0.99.

In Formula 1, 0.7 ≤ b ≤ 1.3 may be satisfied, or 0.9 ≤ b ≤ 1.04 may be satisfied, so that the ionic conductivity of the halide solid electrolyte can be increased.

In Formula 1, the upper limit and the lower limit of the range of b may be defined by any combination of values selected from 0.7, 0.8, 0.9, 0.96, 1, 1.04, 1.1, 1.2, and 1.3.

In Formula 1, M may be Zr.

In Formula 1, M may be Ti.

The halide solid electrolyte may be Li_{2.8}Zr_{0.2}Al_{0.8}F₆ or Li_{2.7}Ti_{0.3}Al_{0.7}F₆.

The halogenated solid electrolyte may be crystalline or amorphous.

The halogenated solid electrolyte may include a crystalline phase represented by Formula 1.

The halide solid electrolyte has a shape that is not limited. Examples of the shape include needle shapes, spherical shapes, and ellipsoidal shapes. The halide solid electrolyte may be particles. The halide solid electrolyte may have a pellet shape or a plate shape.

When the shape of the halide solid electrolyte is, for example, a particle shape (e.g., spherical shape), the solid electrolyte may have a median diameter of greater than or equal to 0.1 µm and less than or equal to 100 µm or a median diameter of greater than or equal to 0.5 µm and less than or equal to 10 µm. In this case, the halide solid electrolyte and one or more other materials (e.g., an active material) can be favorably dispersed. The "median diameter" is a particle diameter corresponding to a cumulative deposition of 50% in a volume-based particle size distribution. The volume-based particle size distribution is measured, for example, with a laser diffraction analyzer or an image analyzer.

Examples of the positive electrode active material include lithium transition metal oxides, transition metal fluorides, polyanions, fluorinated polyanionic materials, transition metal oxyfluorides, transition metal oxysulfides, and transition metal oxynitrides. Examples of the lithium transition metal oxides include Li(Ni,Co,Al)O₂, Li(Ni,Co,Mn)O₂, and Li(Ni,Mn)O₂. The Li(Ni,Co,Mn)O₂ may be LiCoO₂, for example. The Li(Ni,Mn)O₂ may be Li(Ni_{0.5}Mn_{1.5})O₂, for example.

In the present disclosure, "(A,B,C)" in chemical formulae means "at least one selected from the group consisting of A, B, and C". "(A,B)" in chemical formulae means "at least one selected from the group consisting of A and B".

The positive electrode active material may be a lithium transition metal oxide or a lithium transition metal oxyfluoride; these are materials that operate at a particularly high potential. A crystal structure of the positive electrode active material is, for example, a layered rock salt structure, a rock salt structure, and a spinel structure.

The positive electrode active material included in the positive electrode material of the first embodiment may be at least one selected from the group consisting of lithium transition metal oxides and lithium transition metal oxyfluorides. In the positive electrode material of the first embodiment, the positive electrode active material may have at least one crystal structure selected from the group consisting of layered rock salt structures, rock salt structures, and spinel structures.

The positive electrode active material may contain Ni so as to increase the operating potential of a battery.

The positive electrode active material to be used may be Li(Ni_{0.5}Mn_{1.5})O₂ having a spinel structure.

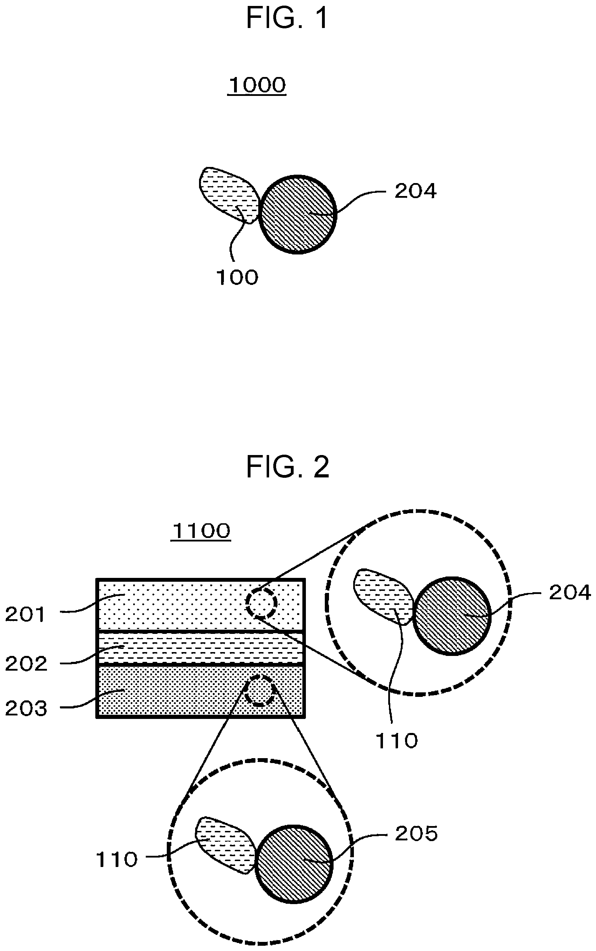

Fig. 1 is a cross-sectional view of a positive electrode material 1000, according to the first embodiment.

The positive electrode material 1000 of the first embodiment includes a positive electrode active material 204 and a halide solid electrolyte 100. The halide solid electrolyte 100 contains F.

The positive electrode active material 204 has a shape that is not limited to a particular shape. The positive electrode active material 204 may be particles. The positive electrode active material 204 may have a median diameter of greater than or equal to 0.1 µm and less than or equal to 100 µm. When the positive electrode active material 204 has a median diameter of greater than or equal to 0.1 µm, the positive electrode active material 204 and one or more other materials (e.g., the halide solid electrolyte 100) can be favorably dispersed. Consequently, the charge-discharge characteristics of a battery are improved. When the positive electrode active material 204 has a median diameter of less than or equal to 100 µm, a lithium diffusion rate in the positive electrode active material 204 is improved. Consequently, a high-power operation of a battery can be achieved.

The positive electrode active material 204 may have a median diameter greater than that of the halide solid electrolyte 100. In this case, the positive electrode active material 204 and the halide solid electrolyte 100 can be favorably dispersed.

The positive electrode active material 204 may include a coating layer formed on at least a portion of a surface of the positive electrode active material 204. For example, the coating layer may be formed on the surface of the positive electrode active material 204 before the positive electrode active material 204 is mixed with a conductive additive and a binding agent. Examples of a coating material that is included in the coating layer include sulfide solid electrolytes and oxide solid electrolytes.

### (Second Embodiment)

A second embodiment will now be described. Descriptions given in the first embodiment may not be repeated.

Fig. 2 is a cross-sectional view of a battery 1100, according to the first embodiment.

The battery 1100 of the second embodiment includes a positive electrode 201, an electrolyte layer 202, and a negative electrode 203. The electrolyte layer 202 is disposed between the positive electrode 201 and the negative electrode 203.

The positive electrode 201 includes a positive electrode material of the first embodiment (e.g., the positive electrode material 1000).

With this configuration, the battery can have an improved energy density.

A method for controlling the battery of the second embodiment (e.g., a method for charging the battery) may be one in which a charge potential of the positive electrode is greater than 4.3 V versus lithium so that the battery of the second embodiment can exhibit excellent discharge characteristics. That is, a method for charging the battery of the second embodiment may comprise, for example, charging the battery in a manner such that a charge potential of the positive electrode 201 is greater than 4.3 V versus lithium.

The positive electrode 201 includes the positive electrode active material 204 and a solid electrolyte 110. Specifically, the solid electrolyte 110 is the halide solid electrolyte described in the first embodiment.

The electrolyte layer 202 contains an electrolyte material.

The negative electrode 203 includes a negative electrode active material 205 and a solid electrolyte 110. The solid electrolyte 110 that is included in the electrolyte layer 202 may be the halide solid electrolyte described in the first embodiment.

In the positive electrode 201, a ratio of a volume of the positive electrode active material 204 to a sum of the volume of the positive electrode active material 204 and a volume of the solid electrolyte 110 may be greater than or equal to 0.30 and less than or equal to 0.95 so that the energy density and power of the battery 1100 can be improved.

The positive electrode 201 may have a thickness of greater than or equal to 10 µm and less than or equal to 500 µm so that the energy density and power of the battery 1100 can be improved.

The electrolyte layer 202 contains an electrolyte material. Examples of the electrolyte material include solid electrolyte materials. The electrolyte layer 202 may be a solid electrolyte layer. The solid electrolyte material that is included in the electrolyte layer 202 may be the halide solid electrolyte described in the first embodiment.

Examples of the solid electrolytes that are included in the positive electrode 201, the electrolyte layer 202, and the negative electrode 203 include the halide solid electrolyte described in the first embodiment and, in addition, include sulfide solid electrolytes, oxide solid electrolytes, halide solid electrolytes, and organic polymer solid electrolytes.

Examples of the sulfide solid electrolytes include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

Examples of the oxide solid electrolytes include
(i) NASICON-type solid electrolytes, such as LiTi₂(PO₄)₃ and element-substituted derivatives thereof,
(ii) perovskite-type solid electrolytes, such as (LaLi)TiO₃,
(iii) LISICON-type solid electrolytes, such as Li₁₄ZnGe₄O₁₆, Li₄SiO₄, LiGeO₄, and element-substituted derivatives thereof,
(iv) garnet-type solid electrolytes, such as Li₇La₃Zr₂O₁₂ and element-substituted derivatives thereof, and
(v) Li₃PO₄ and N-substituted derivatives thereof.

Examples of the halide solid electrolytes include Li₂MgX₄, Li₂FeX₄, Li(Al,Ga,In)X₄, Li₃(Al,Ga,In)X₆, and LiI. X is at least one selected from the group consisting of F, Cl, Br, and I.

Other examples of the halide solid electrolyte material are compounds represented by LiₐMe_{b}Y_{c}Z₆. In the formula, a + mb + 3c = 6 and c > 0 are satisfied. Me is at least one selected from the group consisting of metalloid elements and metal elements other than Li or Y. Z is at least one selected from the group consisting of F, Cl, Br, and I. m represents the valence of Me. m represents the valence of Me. The metalloid elements are B, Si, Ge, As, Sb, and Te. The metal elements are all the elements (excluding hydrogen) from Groups 1 to 12 of the periodic table and all the elements (excluding B, Si, Ge, As, Sb, Te, C, N, P, O, S, and Se) from Groups 13 to 16 of the periodic table.

Me may be at least one selected from the group consisting of Mg, Ca, Sr, Ba, Zn, Sc, Al, Ga, Bi, Zr, Hf, Ti, Sn, Ta, and Nb, so that the ionic conductivity of the halide solid electrolyte can be improved.

The halide solid electrolyte may be Li₃YCl₆ or Li₃YBr₆.

Examples of the organic polymer solid electrolytes include compounds of a polymeric compound and a lithium salt.

The polymeric compound may have an ethylene oxide structure. Polymeric compounds having an ethylene oxide structure can contain large amounts of a lithium salt and, therefore, can further increase the ionic conductivity.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

The electrolyte layer 202 may contain two or more solid electrolyte materials. The two or more solid electrolyte materials may be uniformly dispersed in the electrolyte layer 202. A layer made of a first solid electrolyte material and a layer made of a second solid electrolyte material may be stacked on top of each other in a stacking direction of the battery 1100.

The battery of the second embodiment may include the positive electrode 201, a second electrolyte layer, a first electrolyte layer, and the negative electrode 203, which may be disposed in this order. A solid electrolyte material included in the first electrolyte layer may have a reduction potential lower than that of a solid electrolyte material included in the second electrolyte layer. In this case, the solid electrolyte material included in the second electrolyte layer can be used without being reduced. As a result, charge-discharge efficiency of the battery can be improved.

The electrolyte layer 202 may have a thickness of greater than or equal to 1 µm and less than or equal to 1000 µm so that the energy density and power of the battery can be improved.

The negative electrode 203 includes a material capable of occluding and releasing metal ions (e.g., lithium ions). The material is, for example, the negative electrode active material 205.

Examples of the negative electrode active material 205 include metal materials, carbon materials, oxides, nitrides, tin compounds, and silicon compounds. The metal materials may be elemental metals or alloys. Examples of the metal materials include lithium metals and lithium alloys. Examples of the carbon materials include natural graphite, coke, partially graphitized carbon, carbon fibers, spherical carbon, artificial graphite, and amorphous carbon. The negative electrode active material may be, for example, silicon (i.e., Si), tin (i.e., Sn), a silicon compound, or a tin compound; these are suitable from the standpoint of a capacity density.

The negative electrode active material 205 has a shape that is not limited to a particular shape. The negative electrode active material 205 may be particles. The negative electrode active material 205 may have a median diameter of greater than or equal to 0.1 µm and less than or equal to 100 µm. When the negative electrode active material 205 has a median diameter of greater than or equal to 0.1 µm, the negative electrode active material 205 and the solid electrolyte 110 can be favorably dispersed in the negative electrode 203. Consequently, the charge-discharge characteristics of the battery 1100 are improved. When the negative electrode active material 205 has a median diameter of less than or equal to 100 µm, a lithium diffusion rate in the negative electrode active material 205 is improved. Consequently, a high-power operation of the battery 1100 can be achieved.

The negative electrode active material 205 may have a median diameter greater than that of the solid electrolyte 110. In this case, the negative electrode active material 205 and the solid electrolyte 110 can be favorably dispersed in the negative electrode 203.

In the negative electrode 203, a ratio of a volume of the negative electrode active material 205 to a sum of the volume of the negative electrode active material 205 and a volume of the solid electrolyte 110 may be greater than or equal to 0.30 and less than or equal to 0.95 so that the energy density and power of the battery 1100 can be improved.

The negative electrode 203 may have a thickness of greater than or equal to 10 µm and less than or equal to 500 µm so that the energy density and power of the battery 1100 can be improved.

At least one selected from the group consisting of the positive electrode 201, the electrolyte layer 202, and the negative electrode 203 may include a nonaqueous electrolyte solution, a gel electrolyte, or an ionic liquid so that the transfer of lithium ions can be facilitated to improve the power characteristics of the battery.

The nonaqueous electrolyte solution includes a nonaqueous solvent and a lithium salt dissolved in the nonaqueous solvent.

Examples of the nonaqueous solvent include cyclic carbonate solvents, chain carbonate solvents, cyclic ether solvents, chain ether solvents, cyclic ester solvents, chain ester solvents, and fluorinated solvents. Examples of the cyclic carbonate solvents include ethylene carbonate, propylene carbonate, and butylene carbonate. Examples of the chain carbonate solvents include dimethyl carbonate, ethyl methyl carbonate, and diethyl carbonate. Examples of the cyclic ether solvents include tetrahydrofuran, 1,4-dioxane, and 1,3-dioxolane. Examples of the chain ether solvents include 1,2-dimethoxyethane and 1,2-diethoxyethane. Examples of the cyclic ester solvents include γ-butyrolactone. Examples of the chain ester solvents include methyl acetate. Examples of the fluorinated solvents include fluoroethylene carbonate, fluoromethyl propionate, fluorobenzene, fluoroethyl methyl carbonate, and fluorodimethylene carbonate. One nonaqueous solvent selected from these may be used alone. Alternatively, a combination of two or more nonaqueous solvents selected from these may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. A concentration of the lithium salt is in a range of, for example, greater than or equal to 0.5 mol/L and less than or equal to 2 mol/L.

The gel electrolyte may be a polymeric material impregnated with a nonaqueous electrolyte solution. Examples of the polymeric material include polyethylene oxide, polyacrylonitrile, polyvinylidene fluoride, polymethylmethacrylate, and polymers having an ethylene oxide linkage.

Examples of a cation included in the ionic liquid include
(i) aliphatic chain quaternary salts, such as tetraalkylammoniums or tetraalkylphosphoniums,
(ii) aliphatic cyclic ammoniums, such as pyrrolidiniums, morpholiniums, imidazoliniums, tetrahydropyrimidiniums, piperaziniums, and piperidiniums, and
(iii) nitrogen-containing heterocyclic aromatic cations, such as pyridiniums and imidazoliums.

Examples of an anion included in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

At least one selected from the group consisting of the positive electrode 201, the electrolyte layer 202, and the negative electrode 203 may include a binding agent so that adhesion between particles can be improved.

Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polyether sulfones, hexafluoropolypropylene, styrene butadiene rubber, and carboxymethyl cellulose. Other examples of the binding agent are copolymers. For example, the binding agent may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acids, and hexadiene. The binding agent may be a mixture of two or more materials selected from these.

At least one selected from the positive electrode 201 and the negative electrode 203 may include a conductive additive so that electron conductivity can be improved.

Examples of the conductive additive include
(i) graphites, such as natural graphite and artificial graphite,
(ii) carbon blacks, such as acetylene black and Ketjen black,
(iii) conductive fibers, such as carbon fibers and metal fibers,
(iv) carbon fluoride,
(v) metal powders, such as aluminum powders,
(vi) conductive whiskers, such as zinc oxide whiskers and potassium titanate whiskers,
(vii) conductive metal oxides, such as titanium oxide, and
(viii) conductive polymers, such as polyaniline, polypyrrole, and polythiophene.
In instances where cost reduction is to be achieved, a conductive additive among those of (i) or (ii) may be used.

Examples of a shape of the battery of the second embodiment include coin shapes, cylindrical shapes, prismatic shapes, sheet shapes, button shapes, flat shapes, and stack shapes.

The battery of the second embodiment may be manufactured, for example, as follows. Materials for forming the positive electrode, materials for forming the electrolyte layer, and materials for forming the negative electrode are prepared, and a stack in which the positive electrode, the electrolyte layer, and the negative electrode are disposed in this order is produced with a known method.

### EXAMPLES

The present disclosure will now be described in more detail with reference to Examples and Comparative Examples.

### EXAMPLE 1

### (Preparation of Halide Solid Electrolyte)

In an argon atmosphere with a dew point of -60°C or less (hereinafter referred to as a dry argon atmosphere), raw material powders of LiF, ZrF₄, and AlF₃ were prepared in a molar ratio of LiF:ZrF₄:AlF₃ = 2.8:0.2:0.8. The raw material powders were ground and mixed in a mortar. The resulting mixed powder, together with an organic solvent, namely, γ-butyrolactone, was added to a ball mill pot. Subsequently, a milling process was performed in a planetary ball mill at 500 rpm for 12 hours. In this instance, a solids content was 50%, and 1 mmϕ balls were used. The solids content is calculated by {(mass of the raw materials added)/(mass of the raw materials added + mass of the solvent added)} × 100. After the milling process, the balls were removed to give a slurry. The resulting slurry was dried in a mantle heater at 200°C for 1 hour under a nitrogen flow. The resulting solid was ground in a mortar to give a powder of a halide solid electrolyte of Example 1. The halide solid electrolyte material of Example 1 had a composition represented by Li_{2.8}Zr_{0.2}Al_{0.8}F₆.

### (Preparation of Battery)

In a dry argon atmosphere, the halide solid electrolyte of Example 1 and Li(Ni_{0.5}Mn_{1.5})O₂, which is an active material, were prepared in a volume ratio of 40:60. The materials were mixed in an agate mortar. In this manner, a positive electrode material of Example 1 was prepared.

In an insulating cylinder having an inside diameter of 9.5 mm, Li₃PS₄ (57.41 mg), the halide solid electrolyte of Example 1 (26 mg), and the positive electrode material of Example 1 (9.9 mg) were stacked in this order. A pressure of 720 MPa was applied to the resulting multilayer body to form a first electrolyte layer, a second electrolyte layer, and a positive electrode. That is, the second electrolyte layer was held between the first electrolyte layer and the positive electrode. The first electrolyte layer had a thickness of 450 µm, and the second electrolyte layer had a thickness of 150 µm.

Next, metallic Li (thickness: 200 µm) was stacked on the first electrolyte layer. A pressure of 10 MPa was applied to the resulting multilayer body to form a negative electrode.

Next, current collectors formed from stainless steel were attached to the positive electrode and the negative electrode, and current collector leads were attached to the current collectors.

Lastly, the interior of the insulating cylinder was isolated from the ambient environment with an insulating ferrule, and thus, the interior of the cylinder was sealed. In this manner, a battery of Example 1 was produced.

### (Charge-Discharge Test)

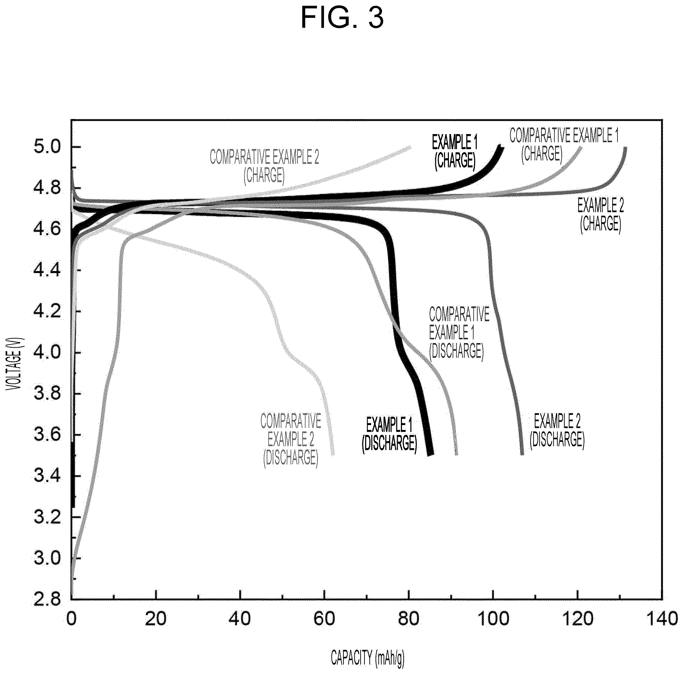

Fig. 3 is a graph showing an initial discharge characteristic of the battery of Example 1. The initial charge-discharge characteristic was measured in the following manner. Note that in Fig. 3, the voltage plotted on the vertical axis is a voltage versus lithium, that is, an electrode potential (V vs. Li/Li⁺).

The battery of Example 1 was placed in a constant-temperature oven at 85°C.

The battery of Example 1 was charged at a current density of 18 µA/cm² until a voltage of 5.0 V was reached. The current density corresponds to a 0.01 Crate.

Next, the battery of Example 1 was discharged at a current density of 18 µA/cm² until a voltage of 3.5 V was reached.

The result of the charge-discharge test was that the battery of Example 1 had an initial charge-discharge efficiency of 83.7%.

### EXAMPLE 2

### (Preparation of Halide Solid Electrolyte)

In a dry argon atmosphere, raw material powders of LiF, TiF₄, and AlF₃ were prepared in a molar ratio of LiF:TiF₄:AlF₃ = 2.7:0.3:0.7. The raw material powders were ground and mixed in a mortar. The resulting mixed powder was subjected to a milling process in a planetary ball mill at 500 rpm for 12 hours. In this manner, a powder of a halide solid electrolyte of Example 2 was prepared. The halide solid electrolyte of Example 2 had a composition represented by Li_{2.7}Ti_{0.3}Al_{0.7}F₆.

### (Preparation of Battery)

In a dry argon atmosphere, the halide solid electrolyte of Example 2 and Li(Ni_{0.5}Mn_{1.5})O₂, which is an active material, were prepared in a volume ratio of 40:60. The materials were mixed in an agate mortar. In this manner, a positive electrode material of Example 2 was prepared.

A battery of Example 2 was prepared in the same manner as in Example 1, with the only differences being those described above.

### (Charge-Discharge Test)

A charge-discharge test was performed on the battery of Example 2 in the same manner as in Example 1. The battery of Example 2 was favorably charged and discharged as with the battery of Example 1. The battery of Example 2 had an initial charge-discharge efficiency of 81.4%.

### COMPARATIVE EXAMPLE 1

A charge-discharge test was performed in the same manner as in Example 1, except that Li₃PS₄ was used instead of the halide solid electrolyte of Example 1. Note that no first electrolyte layer was used in the battery that was prepared. The thickness of the second electrolyte layer was 600 µm. That is, in the battery of Comparative Example 1, the electrolyte layer disposed between the positive electrode and the negative electrode was a Li₃PS₄ layer having a thickness of 600 µm.

The result of the charge-discharge test was that the battery of Comparative Example 1 had an initial charge-discharge efficiency of 75.6%.

### COMPARATIVE EXAMPLE 2

Li_{2.7}Y_{1.1}Cl₆ was used instead of the halide solid electrolyte of Example 1.

In a dry argon atmosphere, raw material powders of LiCl and YCl₃ were prepared in a molar ratio of 2.7:1.1. A mixture of the raw material powders was heat-treated in an argon atmosphere at 550°C for 1 hour. In this manner, a solid electrolyte Li_{2.7}Y_{1.1}Cl₆ was prepared.

A charge-discharge test was performed in the same manner as in Example 1, except that the Li_{2.7}Y_{1.1}Cl₆ was used instead of the halide solid electrolyte of Example 1.

The result of the charge-discharge test was that the battery of Comparative Example 2 had an initial charge-discharge efficiency of 77.2%.

**[Table 1]**

| | Composition | Initial charge-discharge efficiency [%] |
|---|---|---|
| Example 1 | Li_{2.8}Zr_{0.2}Al_{0.8}F₆ | 83.7 |
| Example 2 | Li_{2.7}Ti_{0.3}Al_{0.7}F₆ | 81.4 |
| Comparative Example 1 | Li₃PS₄ | 75.6 |
| Comparative Example 2 | Li_{2.7}Y_{1.1}Cl₆ | 77.2 |

### <Discussion>

The batteries of Examples 1 and 2 both had a high initial charge-discharge efficiency charging of greater than 80% at 85°C. In contrast, the batteries of Comparative Examples 1 and 2 had a charge-discharge efficiency of less than 80%.

As described above, the batteries that used a positive electrode material of the present disclosure exhibited a good charge-discharge characteristic even in a high operating potential range of greater than 4.3 V vs. Li/Li⁺.

### Industrial Applicability

Positive electrode materials of the present disclosure are utilized, for example, in all-solid-state lithium ion secondary batteries.

### Reference Signs List

- 100: halide solid electrolyte
- 101: powder of solid electrolyte material
- 110: solid electrolyte
- 201: positive electrode
- 202: electrolyte layer
- 203: negative electrode
- 204: positive electrode active material
- 205: negative electrode active material
- 300: pressure molding die
- 301: upper punch
- 302: die
- 303: lower punch
- 1000: positive electrode material
- 1100: battery

## Claims

1. A positive electrode material comprising:
a positive electrode active material; and
a halide solid electrolyte, wherein
the halide solid electrolyte comprises F, and
the positive electrode active material is capable of occluding and releasing lithium ions at greater than 4.3 V versus lithium.

2. The positive electrode material according to claim 1, wherein a ratio of an amount of substance of the F to a sum of amounts of substance of anions that form the halide solid electrolyte is greater than or equal to 0.50 and less than or equal to 1.0.

3. The positive electrode material according to claim 1 or 2, wherein the halide solid electrolyte comprises Li, F, and at least one selected from the group consisting of Ti, Zr, and Al.

4. The positive electrode material according to any one of claims 1 to 3, wherein the halide solid electrolyte is represented by Formula 1:
Li_{6-(4-x)b}(M₁₋ₓAlₓ)_{b}F₆ (1)
where M is at least one selected from the group consisting of Ti and Zr, and 0 < x < 1 and 0 < b ≤ 1.5 are satisfied.

5. The positive electrode material according to claim 4, wherein, in Formula 1, 0.7 ≤ x ≤ 0.8 is satisfied.

6. The positive electrode material according to claim 4 or 5, wherein, in Formula 1, M is Ti.

7. The positive electrode material according to claim 4 or 5, wherein, in Formula 1, M is Zr.

8. The positive electrode material according to any one of claims 1 to 7, wherein the positive electrode active material is at least one selected from the group consisting of lithium transition metal oxides and lithium transition metal oxyfluorides.

9. The positive electrode material according to any one of claims 1 to 8, wherein the positive electrode active material has at least one crystal structure selected from the group consisting of layered rock salt structures, rock salt structures, and spinel structures.

10. The positive electrode material according to any one of claims 1 to 9, wherein the positive electrode active material comprises Ni.

11. The positive electrode material according to claim 10, wherein the positive electrode active material comprises Li(Ni_{0.5}Mn_{1.5})O₂.

12. A battery comprising:
a positive electrode;
a negative electrode; and
an electrolyte layer disposed between the positive electrode and the negative electrode, wherein
the positive electrode comprises the positive electrode material according to any one of claims 1 to 11.

13. A method for charging the battery according to claim 12 comprising charging the battery in a manner such that a charge potential of the positive electrode is greater than 4.3 V versus lithium.
